# EUROPÄISCHE PATENTSCHRIFT

(11) **EP 1 833 642 B1**
(45) Veröffentlichungstag und Bekanntmachung des Hinweises auf die Patenterteilung: **03.02.2010**
(21) Anmeldenummer: 05803330.9
(22) Anmeldetag: 04.11.2005
(51) Int. Cl.: B25F 5/02

(54) **HANDWERKZEUGMASCHINE MIT EINEM STABHANDGRIFF**
HAND MACHINE TOOL WITH A BAR-SHAPED HANDLE
MACHINE-OUTIL COMPRENANT UNE POIGNEE EN FORME DE BARRE

(30) Priorität: 29.12.2004 DE 102004063174
(43) Veröffentlichungstag der Anmeldung: 19.09.2007
(73) Patentinhaber: ROBERT BOSCH GMBH, 70442 Stuttgart (DE)
(72) Erfinder: FELDER, Sacha, CH-4513 Langendorf SO (CH)
(86) Internationale Anmeldenummer: PCT/EP2005/055747
(87) Internationale Veröffentlichungsnummer: WO 2006/072490

(56) Entgegenhaltungen:
- EP-A- 0 878 273
- EP-A- 1 075 906
- EP-A- 1 125 698
- WO-A-03/057395
- GB-A- 1 515 390
- US-A1- 2001 004 580
- US-A1- 2003 221 292

## Beschreibung

### Stand der Technik

Die Erfindung geht aus von einer Handwerkzeugmaschine mit einem Stabhandgriff nach dem Oberbegriff des Anspruchs 1 und von einer Handwerkzeugmaschine mit einem im Handgriff zumindest teilweise integrierten Schalter mit einer Arretiereinheit nach dem Oberbegriff des Anspruchs 4.

Als nächstliegender Stand der Technik wird das Dokument GB1515390A betrachtet, das eine derartige Handwerkzeugmaschine zeigt.

Es ist bereits eine von einer Stabstichsäge gebildete Handwerkzeugmaschine mit einem Stabhandgriff bekannt. Die Stabstichsäge weist ein L-förmiges Gehäuse auf, wobei ein kürzerer Schenkel im Wesentlichen parallel zu einer hin und her gehenden Bewegung eines Sägeblatts und ein längerer Schenkel senkrecht zum kürzeren Schenkel, in Bearbeitungsrichtung ausgerichtet ist. Der den Stabhandgriff bildende längere Schenkel ist im Wesentlichen stabförmig mit einer runden Querschnittsfläche ausgebildet und umschließt einen Elektromotor. Der Stabhandgriff weist einen in der Weise ausgelegten Durchmesser auf, dass ein durchschnittlich großer Bediener einer vorgesehenen Zielgruppe den Stabhandgriff mit einer Hand zumindest weitgehend umgreifen und die Stabstichsäge vorteilhaft über den Stabhandgriff führen kann.

Der kürzere Schenkel des Gehäuses erstreckt sich in die von einem freien Sägeblattende abgewandte Richtung und ist an seinem freien Ende als Halteknauf ausgebildet.

### Vorteile der Erfindung

Die Erfindung geht aus von einer Handwerkzeugmaschine, insbesondere einer Stabstichsäge, mit einem Stabhandgriff.

Es wird vorgeschlagen, dass die Handwerkzeugmaschine einen abnehmbaren Bügelhandgriff und eine Befestigungseinheit zum Befestigen des Bügelhandgriffs, insbesondere an wenigstens einem Gehäuse der Handwerkzeugmaschine, aufweist. Dabei soll in diesem Zusammenhang unter einem "abnehmbaren Bügelhandgriff" insbesondere ein sich zumindest teilweise an einem Gehäuse entlang erstreckender Handgriff verstanden werden, der insbesondere auch dazu vorgesehen ist, von einem Gehäuse der Handwerkzeugmaschine abgenommen zu werden. Dabei soll unter "vorgesehen" insbesondere speziell "ausgestattet" und/oder "ausgelegt" verstanden werden. Unter einem "Stabhandgriff" soll insbesondere ein von einem Gehäuse, das vorzugsweise zumindest teilweise eine Antriebseinheit der Handwerkzeugmaschine umschließt, gebildeter, vorteilhaft in Bearbeitungsrichtung ausgerichteter Handgriff verstanden werden, der insbesondere vorzugsweise dazu vorgesehen ist, von einem durchschnittlich großen Bediener zumindest weitgehend, d.h. mehr als 50% umgriffen zu werden.

Durch die erfindungsgemäße Lösung kann die Handwerkzeugmaschine besonders flexibel an unterschiedliche Anforderungen angepasst und der Komfort der Handwerkzeugmaschine kann gesteigert werden.

Der Bügelhandgriff kann mittels verschiedenen, dem Fachmann als sinnvoll erscheinenden, insbesondere kraftschlüssigen und/oder formschlüssigen, Befestigungseinheiten an einem Gehäuse der Handwerkzeugmaschine befestigt sein, besonders vorteilhaft jedoch über eine Befestigungseinheit, die dazu vorgesehen ist, den Bügelhandgriff werkzeuglos an einem Gehäuse der Handwerkzeugmaschine zu befestigen und/oder von dem Gehäuse zu lösen. Damit kann ein besonders schnelles und komfortables Anpassen der Handwerkzeugmaschine erreicht werden.

Zudem kann der Komfort gesteigert werden, wenn im Bügelhandgriff ein Ein- und Ausschalter der Handwerkzeugmaschine zumindest teilweise integriert ist und insbesondere, wenn im Bügelhandgriff eine Arretiereinheit zur Arretierung des Ein- und Ausschalters, insbesondere zur Arretierung in einer Einschaltstellung, vorgesehen ist.

Ferner wird eine Handwerkzeugmaschine mit einem Handgriff und einem zumindest teilweise im Handgriff integrierten Ein- und Ausschalter sowie einer Arretiereinheit zur Arretierung des Ein- und Ausschalters vorgeschlagen, bei der die Arretiereinheit wenigstens zwei zumindest weitgehend entkoppelte Betätigungselemente aufweist. Unter "entkoppelten Betätigungselementen" sollen in diesem Zusammenhang insbesondere direkt von einem Bediener zu betätigende Elemente, wie Bedienknöpfe, Bedienwippen, Bedienschieber usw., verstanden werden, die von getrennten Bauteilen gebildet sind und/oder zumindest weitgehend hinsichtlich ihrer Bewegungsfreiheit entkoppelt sind, so dass insbesondere ein Betätigungselement bewegt werden kann, ohne dass sich dabei das andere Betätigungselement bewegt.

Durch die erfmdungsgemäße Lösung kann konstruktiv einfach sowohl bei arretiertem als auch bei nicht arretiertem Ein- und Ausschalter eine vorteilhafte, zumindest weitgehende symmetrische Gestalt der Handwerkzeugmaschine erreicht und sowohl für Linkshänder als auch für Rechtshänder können zumindest weitgehend gleiche Voraussetzungen geschaffen werden.

Sind die Betätigungselemente auf gegenüberliegenden Seiten des Bügelhandgriffs angeordnet, können diese für Links- und Rechtshänder komfortabel ausgeführt und insbesondere in komfortabel erreichbaren Bereichen angeordnet werden.

Ist die Befestigungseinheit zumindest teilweise einstückig mit einem Funktionsteil des zumindest teilweise im Bügelhandgriff integrierten Ein- und Ausschalters ausgeführt und/oder ist der zumindest teilweise im Bügelhandgriff integrierte Ein- und Ausschalter zumindest teilweise einstückig mit einem zumindest teilweise im Stabhandgriff integrierten Ein- und Ausschalter ausgeführt, können zusätzliche Bauteile, Montageaufwand, Bauraum, Gewicht und Kosten eingespart werden.

Ist ein Haltemittel der Befestigungseinheit einstückig mit einer Schaltstößelführung ausgeführt, kann mit wenigen Bauteilen eine besonders vorteilhafte Führung eines Schaltstößels erzielt und ein Verklemmen des Schaltstößels kann konstruktiv einfach, insbesondere in einem Übergangsbereich vom Bügelhandgriff in den Stabhandgriff, vermieden werden, und zwar insbesondere, wenn das Haltemittel von einem Arretierbolzen gebildet ist. Besonders vorteilhaft ist dabei der Arretierbolzen hohl ausgeführt und der Schaltstößel ist innerhalb des Arretierbolzens geführt.

In einer weiteren Ausgestaltung der Erfindung wird vorgeschlagen, dass der Bügelhandgriff dazu vorgesehen ist, eine Abstützfläche für eine Handoberseite zu bilden, d.h. einen speziell angepassten freien Durchgriffbereich zwischen dem Gehäuse und dem Bügelhandgriff bildet und/oder eine speziell ausgebildete Form aufweist, so dass die Handoberseite eines Bedieners beim Führen der Handwerkzeugmaschine mittels dem Stabhandgriff zusätzlich am Bügelhandgriff abgestützt oder abstützbar ist. Durch eine entsprechende Ausgestaltung kann eine komfortable Bedienung der Handwerkzeugmaschine mit geringem Haltekraftaufwand und mit besonders sicherer Verbindung zwischen dem Bediener und der Handwerkzeugmaschine erzielt werden.

Um für verschiedene Bediener stets einen vorteilhaften Abstand zwischen dem Bügelhandgriff und dem Gehäuse bzw. einen vorteilhaften freien Durchgriffbereich zwischen dem Bügelhandgriffund dem Gehäuse gewährleisten zu können, kann der freie Durchgriffbereich einstellbar ausgeführt sein, beispielsweise indem der Bügelhandgriff in seiner Position verstellbar und/oder bewegbar gelagert ist und/oder indem zusätzliche Teile vorgesehen sind, die dazu dienen, am Bügelhandgriff und/oder am Gehäuse angebracht zu werden.

Ist die Abstützfläche von einem weichelastischen Bauteil gebildet, wie insbesondere von einem aus Gummi oder von einem aus einem gummiähnlichen Material hergestellten Bauteil, kann ein sich an einen Bediener automatisch anpassender freier Durchgriffbereich erreicht und es kann durch eine elastische Spannkraft des Bauteils die Sicherheit der Verbindung zwischen dem Bediener und der Handwerkzeugmaschine weiter gesteigert werden.

Die erfindungsgemäße Lösung kann bei verschiedenen, dem Fachmann als sinnvoll erscheinenden Handwerkzeugmaschinen eingesetzt werden, wie beispielsweise bei Winkelschleifern, Schabern, Heckenscheren, Hobeln usw., jedoch besonders vorteilhaft bei Stabstichsägen, bei denen anwendungsbedingt verschiedene Haltemöglichkeiten besonders von Vorteil sind. Beispielsweise wird eine Stabstichsäge bei einer Bearbeitung einer in Hüfthöhe angeordneten, horizontal ausgerichteten Tischplatte von oben und einer Betrachtung eines Schnittverlaufs von oben vorzugsweise an einem Bügelhandgriff geführt, während eine Stabstichsäge bei einer Bearbeitung einer in Hüfthöhe angeordneten, horizontal ausgerichteten Tischplatte von unten und einer Betrachtung eines Schnittverlaufs von oben vorzugsweise an einem Stabhandgriff geführt wird. Der Bügelhandgriff ist dabei vorzugsweise an eine L-förmige Gehäuseform angepasst, wodurch die erfindungsgemäße Lösung mit geringem Anpassungsaufwand, insbesondere bei Sägen und Hobeln, angewendet werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine von einer Stabstichsäge gebildete, erfindungsgemäße Handwerkzeugmaschine in einer Seitenansicht,
- Fig. 2: die Handwerkzeugmaschine aus Figur 1 kurz vor der Montage eines Bügelhandgriffs,
- Fig. 3: die Handwerkzeugmaschine unmittelbar bei der Montage des Bügelhandgriffs,
- Fig. 4: der Bügelhandgriff von oben,
- Fig. 5: einen Ausschnitt eines Längsschnitts durch die Handwerkzeugmaschine aus Figur 1 bei montiertem Bügelhandgriff,
- Fig. 6: einen vergrößerten Ausschnitt VI aus Figur 5 und
- Fig. 7: einen vergrößerten Ausschnitt VII des Bügelhandgriffs aus Figur 5.

### Beschreibung des Ausführungsbeispiels

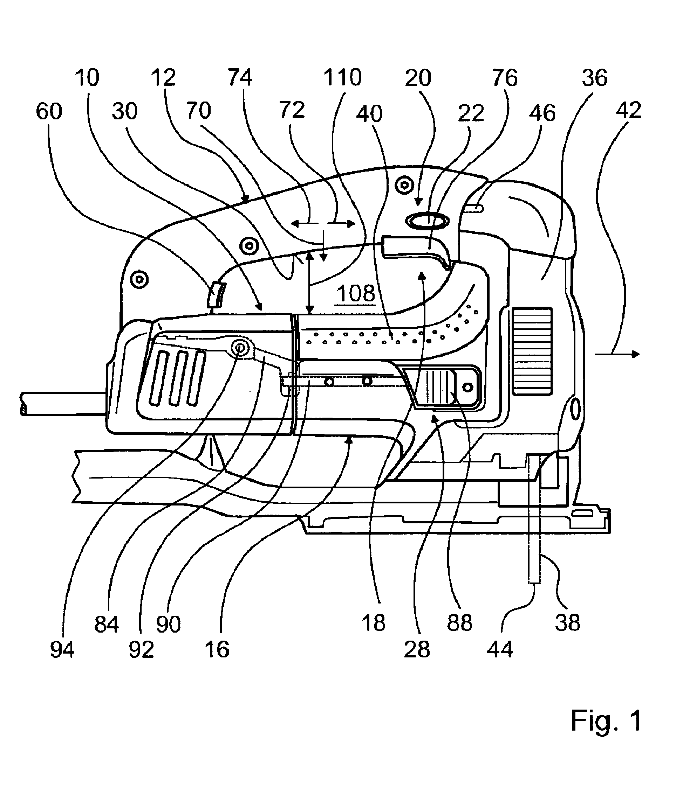

Figur 1 zeigt eine von einer Stabstichsäge gebildete erfindungsgemäße Handwerkzeugmaschine mit einem Stabhandgriff 10. Die Handwerkzeugmaschine weist ein im Wesentlichen L-förmiges Gehäuse 16 auf, wobei ein kürzerer Schenkel 36 im Wesentlichen parallel zu einer hin und her gehenden Bewegung eines Sägeblatts 38 und ein längerer Schenkel 40 senkrecht zum kürzeren Schenkel 36, parallel zu einer Bearbeitungsrichtung 42 ausgerichtet ist. Der den Stabhandgriff 10 bildende längere Schenkel 40 ist im Wesentlichen stabförmig mit einer runden Querschnittsfläche ausgebildet und umschließt einen nicht näher dargestellten Elektromotor. Der Stabhandgriff 10 weist einen in der Weise ausgelegten Durchmesser auf, dass ein durchschnittlich großer Bediener den Stabhandgriff 10 mit einer Hand zumindest weitgehend umgreifen und die Handwerkzeugmaschine vorteilhaft über den Stabhandgriff 10 führen kann.

Der kürzere Schenkel 36 des Gehäuses 16 erstreckt sich in die von einem freien Sägeblattende 44 abgewandte Richtung und ist an seinem freien Ende als Halteknauf ausgebildet.

Die Handwerkzeugmaschine weist neben dem Stabhandgriff 10 zudem einen abnehmbaren Bügelhandgriff 12 und eine Befestigungseinheit 14 zum Befestigen des Bügelhandgriffs 12 an dem Gehäuse 16 auf (Figuren 1 bis 7). Der Bügelhandgriff 12 erstreckt sich von einem freien Ende des kürzeren Schenkels 36 zu einem freien Ende des längeren Schenkels 40 bzw. des Stabhandgriffs 10, ist bogenförmig ausgebildet und weist eine ovale Querschnittsfläche sowie an die Form des Gehäuses 16 bzw. an die freien Enden der Schenkel 36, 40 angepasste Anlageflächen auf.

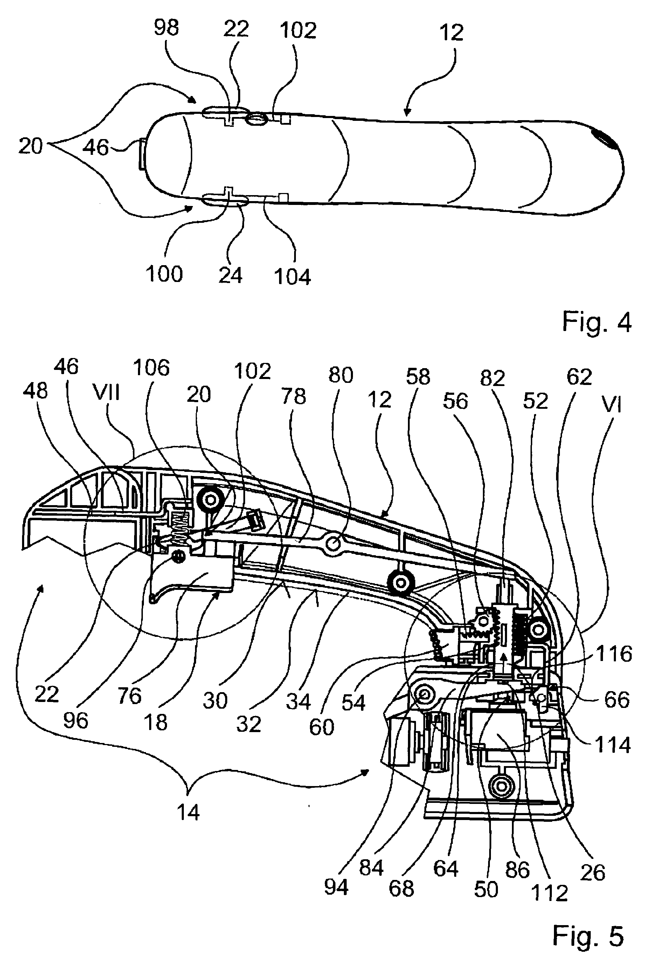

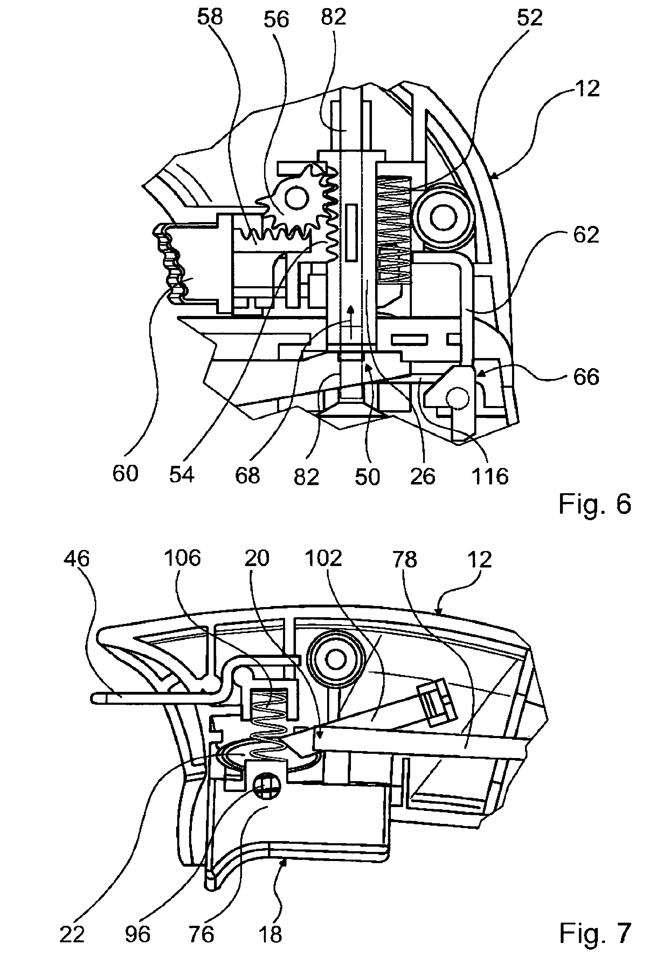

Die Befestigungseinheit 14 ist dazu vorgesehen, den Bügelhandgriff 12 werkzeuglos am Gehäuse 16 zu befestigen und vom Gehäuse 16 wieder zu lösen. Die Befestigungseinheit 14 umfasst an einem zum Anschluss an den kürzeren Schenkel 36 des Gehäuses 16 vorgesehenen ersten Ende des Bügelhandgriffs 12 eine fest eingespannte Metalllasche 46 und im Gehäuse 16 bzw. am freien Ende des kürzeren Schenkels 36 eine entsprechend an die Metalllasche 46 angepasste schlitzförmige Ausnehmung 48 (Figuren 5 und 7). Zudem umfasst die Befestigungseinheit 14 an einem zum Anschluss an den längeren Schenkel 40 vorgesehenen zweiten Ende des Bügelhandgriffs 12 einen Rastmechanismus 50 mit einem bewegbar gegen eine Schraubendruckfeder 52 gelagerten Arretierbolzen 26 (Figuren 5 und 6). Der Arretierbolzen 26 ist über eine angeformte Verzahnung 54 und über ein Zahnrad 56 mit einer an einen Betätigungsknopf 60 angeformten Zahnstange 58 gekoppelt. Am zweiten Ende des Bügelhandgriffs 12 ist zudem eine U-förmige Haltelasche 62 der Befestigungseinheit 14 befestigt. Zur Korrespondenz mit dem Arretierbolzen 26 ist im Endbereich des längeren Schenkels 40 bzw. des Stabhandgriffs 10 an dessen Deckseite eine Ausnehmung 64 eingebracht. Zur Korrespondenz mit der U-förmigen Haltelasche 62 weist der längere Schenkel 40 bzw. der Stabhandgriff 10 an seinem freien Ende einen Aufnahmebereich 66 auf, in den die U-förmige Haltelasche 62 mit einem Schenkel 116 unter eine nicht näher dargestellte Rippe des Gehäuses 16 geführt werden kann. Der Aufnahmebereich 66 ist mittels einer schwenkbaren Verschlussklappe 114 verschlossen, die beim Einführen des Schenkels 116 der U-förmigen Haltelasche 62 in ihre Freigabestellung schwenkt.

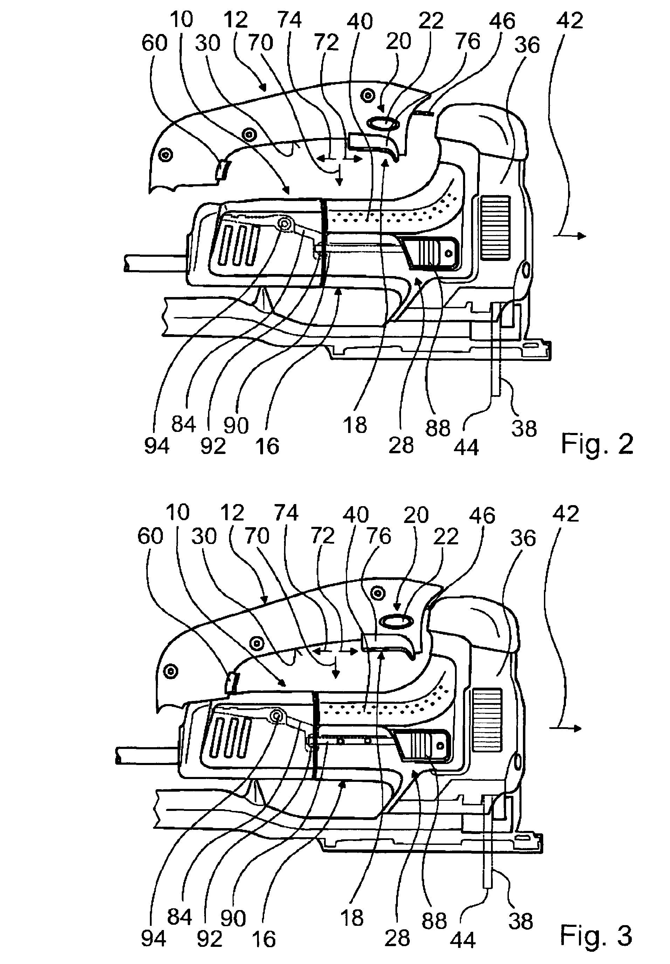

Beim Montieren des Bügelhandgriffs 12 wird zuerst die in Bearbeitungsrichtung 42 weisende Metalllasche 46 in die Ausnehmung 48 des kürzeren Schenkels 36 eingeführt (Figuren 2 und 3). Anschließend wird der Bügelhandgriff 12 unter Krafteinwirkung in Richtung 70 des Stabhandgriffs 10 in Richtung 72 des kürzeren Schenkels 36 geschoben. Dabei wird die U-förmige Haltelasche 62 mit ihrem Schenkel 116 in den Aufnahmebereich 66 unter die Rippe des Gehäuses 16 geführt und der Arretierbolzen 26 kommt mit dem längeren Schenkel 40 bzw. dem Stabhandgriff 10 in Anlage und wird entgegen einer Federkraft der Schraubendruckfeder 52 in eine vom längeren Schenkel 40 abgewandte Richtung 68 ausgelenkt. Bei einer fortgesetzten Bewegung des Bügelhandgriffs 12 in Richtung 72 kommt der Arretierbolzen 26 über der Ausnehmung 64 im längeren Schenkel 40 bzw. im Stabhandgriff 10 zum Liegen und rastet angetriebenen durch die Schraubendruckfeder 52 in der Ausnehmung 64 ein, wodurch der Bügelhandgriff 12 am Gehäuse 16 in einer eindeutigen Position fixiert ist. Im montierten Zustand umschließt der Bügelhandgriff 12 einen Teil des freien Endes des kürzeren Schenkels 36 und einen Teil des freien Endes des längeren Schenkels 40.

Zum Lösen des Bügelhandgriffs 12 wird der Betätigungsknopf 60 gedrückt und der Arretierbolzen 26 in die vom Stabhandgriff 10 abgewandte Richtung 68 ausgelenkt (Figuren 5 und 6). Anschließend kann der Bügelhandgriff 12 in eine von dem kürzeren Schenkel 36 abgewandte Richtung 74 abgezogen werden (Figuren 2 und 3).

Im Bügelhandgriff 12 ist ein Teil eines Ein- und Ausschalters 18 integriert, und zwar ein an dem dem kürzeren Schenkel 36 zugewandten Ende des Bügelhandgriffs 12 angeordneter, verschiebbar gelagerten Betätigungsknopf 76 (Figuren 5 und 6). Der Betätigungsknopf 76 ist mit einem Ende einer sich in Längsrichtung durch den Bügelhandgriffs 12 erstreckenden Schaltwippe 78 des Ein- und Ausschalters 18 gekoppelt, die in Längsrichtung des Bügelhandgriffs 12 ca. im mittleren Bereich desselben in einer Lagerstelle 80 schwenkbar gelagert ist. An einem zweiten Ende der Schaltwippe 78 ist ein Schaltstößel 82 des Ein- und Ausschalters 18 mit derselben gekoppelt. Der Arretierbolzen 26 der Befestigungseinheit 14 ist einstückig mit einer Schaltstößelführung ausführt, und zwar ist der Schaltstößel 82 in dem hohlen, rohrförmige Arretierbolzen 26 geführt.

Wird im montierten Zustand des Bügelhandgriffs 12 der Betätigungsknopf 76 von einem Bediener betätigt, wird die Schaltwippe 78 an ihrem dem Betätigungsknopf 76 zugewandten Ende in die vom Stabhandgriff 10 abgewandte Richtung und an ihrem dem Betätigungsknopf 76 abgewandten Ende in Richtung des Stabhandgriffs 10 ausgelenkt. Der Schaltstößel 82 wird durch den Arretierbolzen 26 hindurch geschoben und wirkt über eine schwenkbare Klappe 112 auf einen Elektroschalter 86. Die schwenkbare Klappe 112 ist an einer Schaltwippe 84 eines im Stabhandgriff 10 integrierten Ein- und Ausschalters 28 gelagert und ist um eine in Längsrichtung des Stabhandgriffs 10 ausgerichtete Lagerachse schwenkbar. Die Schaltwippe 84 selbst ist bei montiertem Bügelhandgriff 12 durch den in den Aufnahmebereich 66 eingeführten Schenkel 116 der U-förmige Haltelasche 62 arretiert, wodurch eine Aktivierung und/oder Deaktivierung der Handwerkzeugmaschine über einen am Stabhandgriff 10 angeordneten Betätigungsschieber 88 vermieden wird. Mittels der Klappe 112 wird bei demontiertem Bügelhandgriff 12 ein freier Durchgang von einem Außenbereich in den Bereich des Elektroschalters 86 und damit ein Schmutzeintritt vermieden.

Hinsichtlich des Elektroschalters 86 sind der im Bügelhandgriff 12 teilweise integrierte Ein- und Ausschalter 18 und der im Stabhandgriff 10 integrierte Ein- und Ausschalter 28 einstückig ausgeführt bzw. ist sowohl mittels dem Ein- und Ausschalter 18 des Bügelhandgriffs 12 als auch mittels dem Ein- und Ausschalter 28 des Stabhandgriffs 10 über den Elektroschalter 86 die Handwerkzeugmaschine aktivierbar und deaktivierbar.

Der im Stabhandgriff 10 integrierte Ein- und Ausschalter 28 weist an einem dem kürzeren Schenkel 36 zugewandten Ende des Stabhandgriffs 10 den Betätigungsschieber 88 auf, der mit einer sich innerhalb des Stabhandgriffs 10 in dessen Längsrichtung erstreckender und in dessen Längsrichtung beweglich gelagerter Schubstange 90 gekoppelt ist (Figur
1). Die Schubstange 90 ist mit ihrem dem Betätigungsschieber 88 abgewandten Ende mit der Schaltwippe 84 gekoppelt, und zwar greift ein an der Schubstange 90 befestigter, nicht näher dargestellter Bolzen durch ein Langloch 92 der Schaltwippe 84. Die Schaltwippe 84 ist in Längsrichtung des Stabhandgriffs 10 zwischen der Koppelstelle mit der Schubstange 90 und dem Elektroschalter 86 in einer Lagerstelle 94 schwenkbar gelagert (Figuren 1, 5 und 6).

Wird der Betätigungsschieber 88 von einem Bediener in Richtung des kürzeren Schenkels 36 des Gehäuses 16 geschoben, wird die Schaltwippe 84 an ihrem der Schubstange 90 zugewandten Ende in Richtung einer Deckseite des Stabhandgriffs 10 und mit ihrem der Schubstange 90 abgewandten Ende in die von der Deckseite des Stabhandgriffs 10 abgewandte Richtung ausgelenkt und wirkt dabei auf den Elektroschalter 86. Im demontierten Zustand des Bügelhandgriffs 12 und bei deaktivierter Handwerkzeugmaschine verschließen die Schaltwippe 84 und die in der Schaltwippe 84 gelagerte Klappe 112 die Ausnehmung 64, die dazu vorgesehen ist, bei montiertem Bügelhandgriff 12 vom Schaltstößel 82 des Ein- und Ausschalters 18 des Bügelhandgriffs 12 zur Betätigung des Elektroschalters 86 durchgriffen zu werden.

Im Bügelhandgriff 12 ist zudem eine Arretiereinheit 20 zur Arretierung des Ein- und Ausschalters 18 integriert. Die Arretiereinheit 20 weist zwei entkoppelte, von getrennten Bauteilen gebildete Betätigungselemente 22, 24 auf, die auf gegenüberliegenden Seiten bzw. Seitenflächen des Bügelhandgriffs 12 angeordnet sind (Figur 4). Die Betätigungselemente 22, 24 weisen jeweils an ihrer ins Innere des Bügelhandgriffs 12 weisenden Seite einen Bolzen 98, 100 auf, die entgegen Federkräften von an den Betätigungselementen 22, 24 angreifenden Blattfedern 102, 104 in eine Durchgangsöffnung 96 des Betätigungsknopfs 76 zur Arretierung desselben in einer Einschaltstellung jeweils unabhängig voneinander einführbar sind, wenn sich der Betätigungsknopf 76 in seiner Einschaltstellung befindet.

Wird von einem Bediener eine Betätigungskraft zur Betätigung des Betätigungsknopfs 76 aufgehoben bevor eine Betätigungskraft zur Betätigung eines der Betätigungselemente 22 aufgehoben wird, verklemmt sich der Bolzen 98 bzw. 100 des betätigten Betätigungselements 22 bzw. 24 in der Durchgangsöffnung 96, und zwar indem der Betätigungsknopf 76 durch eine Federrückstellkraft einer Schraubendruckfeder 106 in Richtung seiner Ausschaltstellung belastet und der Bolzen 98 bzw. 100 zwischen einer Außenwandung des Bügelhandgriffs 12 und dem Betätigungsknopf 76 auf Scherung beansprucht und eingeklemmt wird.

Wird der Betätigungsknopf 76 nach einer Arretierung desselben erneut in Richtung seiner Einschaltstellung mit einer Betätigungskraft belastet, wird das zur Arretierung betätigte Betätigungselement 22 bzw. 24 durch die Federkraft der Blattfeder 102 bzw. 104 in seine Ausgangsstellung nach außen ausgelenkt und die Arretierung ist aufgehoben.

Erfindungsgemäß könnte der Bügelhandgriff 12 zudem dazu vorgesehen sein, eine Abstützfläche 30 für eine Handoberseite zu bilden. Der Bügelhandgriff 12 bildet dabei vorteilhaft einen speziell angepassten freien Durchgriffbereich 108 zwischen dem Gehäuse 16 und dem Bügelhandgriff 12 selbst, so dass die Handoberseite eines Bedieners beim Führen der Handwerkzeugmaschine mittels dem Stabhandgriff 10 zusätzlich am Bügelhandgriff 12 abgestützt ist. Ein Abstand 110 zwischen der dem Stabhandgriff 10 zugewandten Abstützfläche 30 des Bügelhandgriffs 12 in einem in Längsrichtung des Bügelhandgriffs 12 mittleren Bereich und einer der Abstützfläche 30 in diesem Bereich direkt gegenüberliegenden Deckseite des Stabhandgriffs 10 wäre dabei vorteilhaft im Hinblick auf eine Handdicke einer Bedienerzielgruppe ausgelegt und wäre vorzugsweise kleiner als 12 cm und besonders vorzugsweise kleiner als 10 cm ausgeführt.

Um einen zumindest in Grenzen sich an einen Bediener einfach anpassbaren Durchgriffbereich 108 zu erreichen, eine Verbindung zwischen der Handoberseite des Bedieners und einer Abstützfläche 32 des Bügelhandgriffs 12 durch eine elastische Spannkraft zu sichern und um den Komfort zu erhöhen, könnte die Abstützfläche 32 auch von einem weichelastischen Bauteil 34 gebildet sein, wie dies in Fig. 1 und 5 angedeutet ist. Das Bauteil 34 kann dabei mittels verschiedenen, dem Fachmann als sinnvoll erscheinenden kraftschlüssigen, formschlüssigen und/oder stoffschlüssigen Verbindungen lösbar oder unlösbar mit dem Bügelhandgriff 12 verbunden sein.

Wird der Bügelhandgriff 12 dazu genutzt, eine Abstützfläche 30 bzw. 32 für eine Handoberseite zu bilden, sollte die Handwerkzeugmaschine vorteilhaft über den im Stabhandgriff 10 integrierten Ein- und Ausschalter 28 aktivierbar und deaktivierbar sein. Dies könnte möglicherweise erreicht werden, indem auf eine Arretierung der Schaltwippe 84 mittels der U-förmigen Haltelasche 62 verzichtet wird.

## Patentansprüche

1. Handwerkzeugmaschine, insbesondere Stabstichsäge, mit einem Stabhandgriff (10) und einem abnehmbaren Bügelhandgriff (12) und einer Befestigungseinheit (14) zum Befestigen des Bügelhandgriffs (12), wobei im Bügelhandgriffs (12) ein Ein- und Ausschalter (18) zumindest teilweise integriert ist, wobei die Befestigungseinheit (14) zumindest teilweise einstückig mit einem Funktionsteil des Ein- und Ausschalters (18) ausgeführt ist, **dadurch gekennzeichnet, dass** ein Haltemittel der Befestigungseinheit (14) einstückig mit einer Schaltstößelführung ausgeführt ist.

2. Handwerkzeugmaschine nach Anspruch 1, **dadurch gekennzeichnet, dass** die Befestigungseinheit (14) dazu vorgesehen ist, den Bügelhandgriff (12) werkzeuglos zu befestigen und/oder zu lösen.

3. Handwerkzeugmaschine nach Anspruch 1, **dadurch gekennzeichnet, dass** im Bügelhandgriff (12) eine Arretiereinheit (20) zur Arretierung des Ein- und Ausschalters (18) integriert ist.

4. Handwerkzeugmaschine mit einem Handgriff (12) und einem im Handgriff (12) zumindest teilweise integrierten Ein-und Ausschalter (18) sowie einer Arretiereinheit (20) zur Arretierung des Ein- und Ausschalters (18) in einer Einschaltstellung, insbesondere nach Anspruch 3, **dadurch gekennzeichnet, dass** die Arretiereinheit (20) wenigstens zwei zumindest weitgehend entkoppelte Betätigungselemente (22, 24) aufweist.

5. Handwerkzeugmaschine nach Anspruch 4, **dadurch gekennzeichnet, dass** die Betätigungselemente (22, 24) auf gegenüberliegenden Seiten des Bügelhandgriffs (12) angeordnet sind.

6. Handwerkzeugmaschine nach Anspruch 1, **dadurch gekennzeichnet, dass** das Haltemittel von einem Arretierbolzen (26) gebildet ist.

7. Handwerkzeugmaschine zumindest nach Anspruch 1, **dadurch gekennzeichnet, dass** der zumindest teilweise im Bügelhandgriff (12) integrierte Ein- und Ausschalter (18) zumindest teilweise einstückig mit einem zumindest teilweise im Stabhandgriff (10) integrierten Ein- und Ausschalter (28) ausgeführt ist.

8. Handwerkzeugmaschine nach einem der vorhergehenden Ansprüche, **dadurch gekennzeichnet, dass** der Bügelhandgriff (12) dazu vorgesehen ist, eine Abstützfläche (30, 32) für eine Handoberseite zu bilden.

9. Handwerkzeugmaschine nach Anspruch 8, **dadurch gekennzeichnet, dass** die Abstützfläche (32) von einem weichelastischen Bauteil (34) gebildet ist.

10. Bügelhandgriff (12) einer Handwerkzeugmaschine nach einem der vorhergehenden Ansprüche.

## Claims

1. Portable power tool, in particular a barrel jigsaw, comprising a barrel grip (10) and a removable bow-type handle (12) and a fastening unit (14) for fastening the bow-type handle (12), wherein an on/off switch (18) is at least partly integrated in the bow-type handle (12), wherein the fastening unit (14) is at least partly designed in one piece with a functional part of the on/off switch (18), **characterized in that** a retaining means of the fastening unit (14) is formed in one piece with a switch plunger guide.

2. Portable power tool according to Claim 1,
**characterized in that** the fastening unit (14) is intended for fastening and/or releasing the bow-type handle (12) without the use of a tool.

3. Portable power tool according to Claim 1,
**characterized in that** a locking unit (20) for locking the on/off switch (18) is integrated in the bow-type handle (12).

4. Portable power tool having a handle (12) and an on/off switch (18), at least partly integrated in the handle (12), and a locking unit (20) for locking the on/off switch (18) in a switch-on position, in particular according to Claim 3, **characterized in that** the locking unit (20) has at least two at least largely isolated actuating elements (22, 24).

5. Portable power tool according to Claim 4, **characterized in that** the actuating elements (22, 24) are arranged on opposite sides of the bow-type handle (12).

6. Portable power tool according to Claim 1, **characterized in that** the retaining means is formed by a locking pin (26).

7. Portable power tool at least according to Claim 1, **characterized in that** the on/off switch (18) at least partly integrated in the bow-type handle (12) is designed at least partly in one piece with an on/off switch (28) at least partly integrated in the barrel grip (10).

8. Portable power tool according to one of the preceding claims, **characterized in that** the bow-type handle (12) is intended for forming a supporting surface (30, 32) for the back of a hand.

9. Portable power tool according to Claim 8, **characterized in that** the supporting surface (32) is formed by a highly flexible component (34).

10. Bow-type handle (12) of a portable power tool according to one of the preceding claims.

## Revendications

1. Machine-outil manuelle, en particulier une scie sauteuse à barre, comprenant une poignée de barre (10) et une poignée cintrée (12) amovible ainsi qu'une unité de fixation (14) pour fixer la poignée cintrée (12), un dispositif d'enclenchement et de désenclenchement (18) étant au moins partiellement intégré dans la poignée cintrée, l'unité de fixation (14) étant réalisée au moins en partie d'une seule pièce avec une partie fonctionnelle du dispositif d'enclenchement et de désenclenchement (18), **caractérisée en ce qu'**un moyen de retenue de l'unité de fixation (14) est réalisé d'une seule pièce avec un guidage de poussoir de commutation.

2. Machine-outil manuelle selon la revendication 1, **caractérisée en ce que** l'unité de fixation (14) est prévue pour fixer et/ou desserrer sans outil la poignée cintrée (12).

3. Machine-outil manuelle selon la revendication 1, **caractérisée en ce qu'**une unité de blocage (20) pour bloquer le dispositif d'enclenchement et de désenclenchement (18) est intégrée dans la poignée cintrée (12).

4. Machine-outil manuelle comprenant une poignée (12) et un dispositif d'enclenchement et de désenclenchement (18) intégré au moins partiellement dans la poignée (12) ainsi qu'une unité de blocage (20) pour bloquer le dispositif d'enclenchement et de désenclenchement (18) dans une position d'enclenchement, en particulier selon la revendication 3, **caractérisée en ce que** l'unité de blocage (20) présente au moins deux éléments d'actionnement (22, 24) essentiellement désaccouplés.

5. Machine-outil manuelle selon la revendication 4, **caractérisée en ce que** les éléments d'actionnement (22, 24) sont disposés sur des côtés opposés de la poignée cintrée (12).

6. Machine-outil manuelle selon la revendication 1, **caractérisée en ce que** le moyen de retenue est formé par un boulon d'arrêt (26).

7. Machine-outil manuelle selon au moins la revendication 1, **caractérisée en ce que** le dispositif d'enclenchement et de désenclenchement (18) intégré au moins partiellement dans la poignée cintrée (12) est réalisé au moins en partie d'une seule pièce avec un dispositif d'enclenchement et de désenclenchement (28) intégré au moins en partie dans la poignée de barre (10).

8. Machine-outil manuelle selon l'une quelconque des revendications précédentes, **caractérisée en ce que** la poignée cintrée (12) est prévue pour former une surface de support (30, 32) pour le dessus de la main.

9. Machine-outil manuelle selon la revendication 8, **caractérisée en ce que** la surface de support (32) est formée par un composant élastique mou (34).

10. Poignée cintrée (12) d'une machine-outil manuelle selon l'une quelconque des revendications précédentes.
